# EUROPEAN PATENT SPECIFICATION

(11) **EP 1 784 441 B1**
(45) Date of publication and mention of the grant of the patent: **09.03.2011**
(21) Application number: 05774800.6
(22) Date of filing: 26.08.2005
(51) Int. Cl.: C08G 65/333, C08G 65/322, C08L 71/02, C08F 8/30

(54) **A HIGH LOADING FUNCTIONAL RESIN**
FUNKTIONELLES HARZ MIT HOHER BELADUNG
RÉSINE FONCTIONNELLE DE CAPACITÉ DE CHARGE ÉLEVÉE

(30) Priority: 27.08.2004 DK 200401298
(43) Date of publication of application: 16.05.2007
(73) Proprietor: Novo Nordisk A/S, 2880 Bagsværd (DK)
(72) Inventor: JOHANNSEN, Ib, DK-3500 Værløse (DK); GAVELIN, Patrik, S-25733 Rydebäck (SE)
(74) Representative: Inspicos A/S
(86) International application number: PCT/DK2005/000546
(87) International publication number: WO 2006/021217

(56) References cited:
- US-A- 5 917 007
- US-A1- 2004 028 803
- RADEMANN J ET AL: "SPOCC: A RESIN FOR SOLID-PHASE ORGANIC CHEMISTRY AND ENZYMATIC REACTIONS ON SOLID PHASE" JOURNAL OF THE AMERICAN CHEMICAL SOCIETY, AMERICAN CHEMICAL SOCIETY, WASHINGTON, DC, US, vol. 121, 1999, pages 5459-5466, XP000882852 ISSN: 0002-7863

## Description

All patent and non-patent references cited in the application are hereby incorporated by reference in their entirety.

### FIELD OF INVENTION

The present invention relates to polymer resins, methods for their generation and uses thereof. In one aspect the present invention is directed to a resin obtainable by aminolysis of a precursor resin, wherein the precursor resin is obtainable by polymerisation of i) polydisperse di- or oligofunctional vinyl or cyclic ether compounds and ii) aminolytically sensitive, mono-functional vinyl or cyclic ether compounds.

### BACKGROUND OF INVENTION

Traditionally, polystyrene-divinylbenzene (PS-DVB) has been used as a support for solid phase chemistry because of its high thermal stability, chemical inertness, and mechanical robustness. However, the limited swelling of PS-DVB supports in polar media can limit reagent accessibility and prevent chemical applications in which complete solvation of the polymer matrix is essential for reactivity.

Although increased swelling in polar solvents can be achieved by grafting polyethylene glycol (PEG) to chloromethylated PS-DVB, the resulting PEG-grafted PS-DVB supports such as TentaGel^{™} (Rapp Polymere GmbH; Tubingen, Germany) and ArgoGel^{™} (Argonault Technologies; San Carlos, Calif.) have limitations for use in aqueous solvents and for enzymatic chemistry.

Several PEG-based resins exhibit high swelling volumes in both non-polar solvents and water. These resins include, for example, polyoxyethylene-polyoxypropylene (POEPOP), SPOCC (Superior Polymer for Organic Combinatorial Chemistry, a polymer formed by cationic polymerization of a mixture of mono- and bis-oxetanylated PEG macromonomers), and polyoxyethylene-polystyrene (POEPS).

There is a need for improved and cost effective resins for e.g. chromatography and for solid phase organic synthesis reactions in both aqueous and organic media.

### SUMMARY OF INVENTION

In one aspect of the invention there is provided
a resin comprising a polymer matrix comprising a plurality of functional groups,
wherein the polymer matrix is obtainable by aminolysis of a precursor resin with a functional amine, and
wherein the precursor resin is obtainable by polymerisation of a well-defined mixture of
i) cross-link monomers comprising of two or more polymerizable groups, wherein the molecular weight of the cross-link monomer is in the range of 1,000 to 10,000, and
ii) an aminolytically sensitive monomer selected from the group consisting of acrylate esters, the acrylate esters comprising or consisting of an acrylate selected from the group consisting of methyl acrylate, ethyl acrylate, propyl acrylate, hydroxylethyl acrylate, hydroxypropyl acrylate, glycerol acrylate, diethylene glycol acrylate, triethyleneglycol acrylate, tetraethylenglycol acrylate, pentaethyleneglycol acrylate, hexaethyleneglycol acrylate, heptaethyleneglycol acrylate, octaethyleneglycol acrylate, nonaethylenglycol acrylate, and decaethyleneglycol acrylate, including any combination thereof.

There is also provided a method for the synthesis of the above-mentioned resin, as well as uses thereof.

### DESCRIPTION OF THE DRAWING

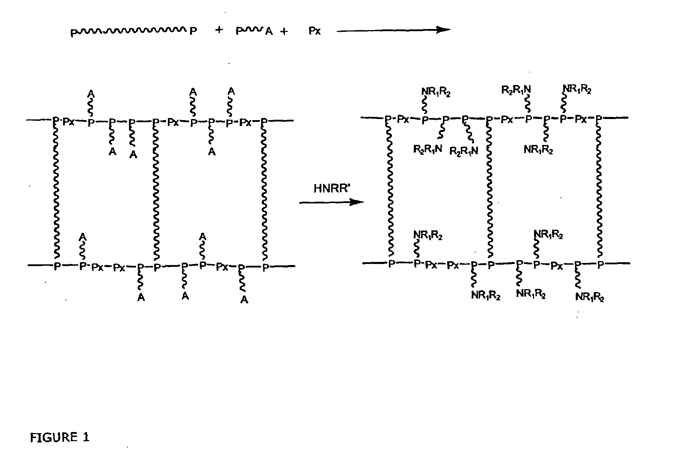

The drawing in figure 1 shows one embodiment of the two key steps in the formation of a high loading functional resin: 1) The formation of a precursor resin via the polymerisation of a mixture of a cross-link monomer(P∼∼∼P), an aminolytically sensitive monomer(P∼∼A), and optionally an extension monomer(Px) under the influence of an initiator. 2) The aminolysis of the precursor resin using a functional amine comprising one or more functional groups (HNRR').

### DETAILED DESCRIPTION OF THE INVENTION

### Definitions

'Cross-link monomers' are defined as macromonomers having two or more polymerizable groups such as vinyl or strained cyclic ether groups. 'Aminolytically sensitive monomers' are defined as monomers having a group sensitive to aminolytical substitution and one polymerizable group such as a vinyl or a strained cyclic ether group.
'Functional amines' are defined as substituted, primary or secondary amines comprising one or more reactive chemical functional groups.

In one aspect of the invention there is provided a resin comprising a polymer matrix comprising a plurality of functional groups, wherein the functional polymer matrix is obtainable by aminolysis of a precursor resin using 'functional amines', wherein the precursor resin is obtainable by polymerisation of a well defined mixture of i) 'cross-link monomers' comprising of two or more polymerizable groups, wherein the molecular weight of the cross-link monomer is in the range of 1,000 to 10,000, such as vinyl or cyclic ether compounds and ii) 'aminolytically sensitive monomers selected from the group consisting of acrylate esters, the acrylate esters comprising or consisting of an acrylate selected from the group consisting of methyl acrylate, ethyl acrylate, propyl acrylate, hydroxylethyl acrylate, hydroxypropyl acrylate, glycerol acrylate, diethylene glycol acrylate, triethyleneglycol acrylate, tetraethylenglycol acrylate, pentaethyleneglycol acrylate, hexaethyleneglycol acrylate, heptaethyleneglycol acrylate, octaethyleneglycol acrylate, nonaethylenglycol acrylate, and decaethyleneglycol acrylate, including any combination thereof.

The polymerisation of the cross-link monomers and the aminolytical sensitive monomers can occur in the presence or absence of an extension monomer. Preferably, in some embodiments, the chain extension monomer is present during the above-mentioned polymerisation.

The chain extension monomer can comprise or consist of a reactive vinyl compound, such as e.g. a methacrylate ester, an acrylamide, a styrene, a vinyl chloride, a vinyl acetate, a N-vinylpyrrolidone, a N-vinylcaprolactone, a vinyl ether, an allyl ether or an acrylonitrile or a strained cyclic ether such as a substituted oxirane or a substituted oxethane.

Apart from a chain extension monomer, the polymerisation can also occur in the presence of a radical or an ionic initiator. The polymerization can further occur in the presence of an oligofunctional starter molecule, such as glycerol, trimethylolethane, trimethylolpropane, pentaerythritol di-trimethylolpropane, di-pentaerythritol.

The cross-link monomers can comprise or consist of polyalkylene glycols substituted with vinyl compounds or strained cyclic ethers, such as di- or oligofunctional polyalkylene glycols vinyl compounds comprising an amide, such as a diamide, or a polyamide, or mixtures thereof.

The cross-link monomers are preferably selected from vinyl-substituted terminally aminated polyalkylene glycols based on ethylene oxide or propylene oxide, or mixtures thereof. In another preferred embodiment the cross-link monomers selected from cyclic ether substituted polyalkylene glycols based on ethylene oxide or propylene oxide, or mixtures thereof.

When the vinyl substituted cross-link monomers comprise an amide, the amide can be e.g. a 1,ω-diamide oligomer or polymer derived from a diamine and a dicarboxylic acid, or derived from a diamine and an amino acid, or an oligoaminoacid, or a polyaminoacid.

The diamine of the vinyl substituted cross-link monomers can be e.g. ethylendiamine, propylenediamine, butylenediamine, pentylenediamine, hexylenediamine, diaminododecane, piperazine, ethyleneoxide derived amines such as 1,5-diamino-3-oxapentane, 1,8-diamino-3,6-dioxaoctane, 1,11-diamino-3,6,9-trioxaundecane, polyamines such as polyethyleneimes for example triethyleneimine; piperazinoethylamine, spermine, spermidine; or a Jeffamine D-230, D-400, D-2000, XTJ-510, XTJ-502, HK-511, XTJ-500, T-403, XTJ-509, T-5000 or a diprimary amine (DPA) such as DPA-3PG, or DPA-425, DPA-725, DPA-1000, DPA-1200, DPA-2000, DPA-4000, DPA-300E, DPA-400E, and DPA-1000E, including any mixture thereof.

The dicarboxylic acid can be e.g. oxalic acid, malonic acid, succinic acid, glutaric acic, adipic acid, dodecandioic acid, diglycolic acid, tartaric acid, citric acid, phthalic acid, or trimellitic acid.

Examples of suitable aminoacids, oligoaminoacids, and polyaminoacids are glycine, alanine, 4-aminobutanoic acid, 6-aminobutanoic acid, 12-aminododecanoic acid, and 4-aminobenzoic acid, including oligomers and polymers thereof.

The vinyl compounds can In some embodiments comprise an acrylamide function, or a methacrylamide function, or an ethacrylamide function.

The molecular weight of the cross-link monomers is in the range of from 1,000 to 10000, for example from 1000 to 4000, such as from 4000 to 10000.

The cross-link monomers can comprise allyl ethers of polymers of ethylene oxide or propylene oxide, including mixtures thereof. The allyl ethers can be e.g. polydisperse polyethyleneoxide diallyl ethers having a molecular eight of from 1,000 to 10000, for example from 1000 to 4000, such as from 4000 to 10000.

Examples of allyl ethers include, but are not limited to, PEG200 diallyl ethers, PEG400 diallyl ethers, PEG600 diallyl ethers, PEG800 diallyl ethers, ethoxylated trimethylolpropane allyl ethers, and ethoxylated pentaerythritol allyl ethers, including any combination thereof.

The cross-link monomers can comprise oxirane substituted polymers of ethylene oxide or propylene oxide, including mixtures thereof. The substituted polymers can be e.g. polydisperse polyethyleneoxide diglycidyl ethers having a molecular weight of from 1,000 to 10000, for example from 1000 to 4000, such as from 4000 to 10000.

Examples of diglycidyl ethers include, but is not limited to, PEG200 diglycidyl ether , PEG400 diglycidyl ether, PEG800 diglycidyl ether, PEG1000 diglycidyl ether, ethoxylated trimethylolpropane glycidyl ether, and ethoxylated pentaerythritol glycidyl ether, including any combination thereof.

The cross-link monomers can comprise oxetane substituted polymers of ethylene oxide or propylene oxide, including mixtures thereof. The substituted polymers can be e.g. polydisperse polyethyleneoxide di 3-methyl-oxetane-3-methanoyl-ethers having a molecular weigh of from 1,000 to 10000, for example from 1000 to 4000, such as from 4000 to 10000.

Examples of polyalkylene oxide dioxetanes include, but are not limited to, PEG200 di 3-methyl-oxetane-3-methanoyl-ethers ether, PEG400 di 3-methyl-oxetane-3-methanoyl-ethers ether, PEG800 di 3-methyl-oxetane-3-methanoyl-ethers ether, PEG2000 di 3-methyl-oxetane-3-methanoyl-ethers ether, PEG-PPG-PEG2000 copolymer di 3-methyl-oxetane-3-methanoyl-ethers ether, including any combination thereof.

The 'Aminolytically sensitive monomers' can be selected from the group consisting of acrylate esters of an acrylate selected from the group consisting of methyl acrylate, ethyl acrylate, propyl acrylate, hydroxylethyl acrylate, hydroxypropyl acrylate, glycerol acrylate, diethylene glycol acrylate, triethyleneglycol acrylate, tetraethylenglycol acrylate, pentaethyleneglycol acrylate, hexaethyleneglycol acrylate, heptaethyleneglycol acrylate, octaethyleneglycol acrylate, nonaethylenglycol acrylate, and decaethyleneglycol acrylate, including any combination thereof.

The reactive vinyl compound of the chain extension monomer can comprise or consist of a reactive vinyl compound, such as e.g. methacrylate esters, such as methyl methacrylate or ethyl methacrylate, or comprise or consist of an acrylamide, such as N-methylacrylamide or N,N-dimethylacrylamide, or comprise or consist of styrene, or comprise or consist of vinyl chloride, or comprise or consist of vinyl acetate, or comprise or consist of N-vinylformamide, or comprise or consist of N-vinylpyrrolidone, or comprise or consist of N-vinylcaprolactone, or comprises or consists of a vinyl ether, or comprises or consists of an allyl ether, or comprise or consist of acrylonitrile.

The functional amine used in the aminolysis of the precursor resin can be a primary amine or a secondary amine, or a mixture thereof.

The functional amine can be illustrated by the general formula RR'NH, wherein R and R' can be identical or non-identical. In one embodiment, R and R' are preferably independently selected from the group consisting of hydrogen, aliphatic radicals, aromatic radicals, wherein said radicals are optionally substituted with one or more heteroatoms such as nitrogen, oxygen and sulphur. In another embodiment, R and R' are independently selected from methyl, ethyl, propyl, cyclohexyl, benzyl or substituted benzyl such as p-methoxybenzyl or p-nitrobenzyl, phenyl or substituted phenyl such as p-methoxyphenyl or p-nitrophenyl.

In a further embodiment, RR'NH is selected from the group consisting of amino acids and amino acid derivatives, such as glycine, lysine or phenylalanine; carbohydrate amines or derivatives thereof such as glucosamine, galactosamine; chiral amines such as amphetamine, alkaloids, diamines such as ethylendiamine, propylenediamine, butylenediamine, pentylenediamine, hexylenediamine, diaminododecane, piperazine, aminopyridine, ethyleneoxide or propyleneoxide derived amines such as 1,5-diamino-3-oxapentane, 1,8-diamino-3,6-dioxaoctane, 1,11-diamino-3,6,9-trioxaundecane, polyamines such as polyalkyleneimines for example triethyleneimine; piperazinoethylamine, spermine, spermidine; aminocrown ethers, hydrazines such as hydrazine, hydroxylamines such as hydroxylamine, oligoamines such as 1,4,7-triamino heptane, 1,4,7,10-tetraamino decane, 1,4,7,10,13-pentaamino tridecane, including any combination thereof.

In one embodiment the ethyleneoxide or propyleneoxide based amines are commercially available alkylglycol amines such as DPA-PG, DPA-2PG, DPA-3PG, NDPA-10, DPA-DEG, DPA-PEG200, NDPA-11, DPA-12, IDPA-12, NDPA12, APDEA, APDIPA from Tomah, or Jeffamines HK511, EDR-148, D230, and T-403.

There is also provided a method for generating a precursor resin for a polymer matrix obtainable by aminolysis of said precursor resin, wherein said precursor resin is obtainable by polymerisation of i) polydisperse di- or oligofunctional vinyl compounds, wherein the molecular weight of the cross-link monomer is in the range of 1,000 to 10,000 and ii) aminolytically sensitive, mono-functional vinyl compounds selected from the group consisting of acrylate esters as above, said method comprising the steps of
providing at least one polydisperse cross-link monomer,
providing at least one aminolytically sensitive monomer,
optionally providing a chain extension monomer,
further optionally providing an initiator of polymerization and/or a surface active agent,
polymerizing the provided monomer compounds under radical or ionic polymerisation conditions,
optionally beading the polymerized vinyl compounds in a batch or continous process, wherein said beading is catalysed by a radiation initiator or a thermally cured initiator, and
obtaining a cross-linked and optionally beaded precursor resin of the polymer matrix according to the invention.

The reaction temperature can be anything suitable, typically it is in the range of from -20°C to 150°C, such as from 20°C to 100°C, preferably from 40°C to 80°C.

The reaction can be run in the presence of a solvent such as water, methanol, ethanol, ethylene glycol, *N,N*-dimethylformamide, *N,N*-dimethylacetamide, *N*-methylpyrrolidone, or acetonitrile, or a polyethyleneglycol, such as diethylene glycol, triethylene glycol, tetraethylene glycol, an ethylenglycol ether such as ethylenglycol dimethyl ether, diethyleneglycol dimethyl ether, triethyleneglycol dimethyl ether, tetraethyleneglycol dimethyl ether, or an ester such as methyl formate or dimethyl carbonate.

The concentration of the reactants in the reaction solution is typically from about 5% (v/v) to 100% (v/v), such as from 10 to 80%, for example from 20 to 60%.

The stirring frequency can be anything suitable, such as e.g. from 10 to 2000 rpm, for example from 50 to 1000 rpm, such as from 100 to 600 rpm.

The method can comprise the further step of providing a surface active agent, and/or a solvent, and/or a non-miscible phase to the reaction mixture, and reacting the reaction mixture under stirring or ultrasonification conditions allowing bead formation and crosslinking.

The non-miscible liquid is a petroleum fraction, an aliphatic oil, a natural fat or triglyceride, an aromatic solvent such as toluene or xylene, a halogenated solvent such as methylene chloride, chloroform, carbon tetrachloride, dichloroethane, trichloroethylene, chlorobenzene, a fluorinated solvent, or mixtures thereof.

The ratio of the reactive phase and the non-miscible liquid can be from 2:1 to 1:100, such as from 4:5 to 1:75, for example from 1:2 to 1:30.

The initiator for the polymerization of vinyl or oxirane polymerizable groups can comprise or consist of a radical polymerization initiator selected from the group consisting of a peroxide, such as ammonium peroxodisufate or tetrabutylammonium peroxodisulfate, a hydroperoxide, such as *t*-butylhydroperoxide, an azo compound, such as azoisobutyronitrile, a mixed initiator system, such as a mixture of ammonium peroxidisulphate and sodium disulfite; or ammonium peroxodisulfite and *N,N,N'N*'-tetramethyldiaminoethane; or ammonium peroxodisulfate, *N,N,N'N*'-tetramethyldiaminoethane, and sodium disulfite; or potassium bromate, ethylenetetraacetic acid, and cupper sulfate. The initiator for the polymerization of oxethane or oxirane polymerizable groups can comprise or consist of Lewis acids, such as BF₃etherates, BF₃, TiCl₄ or a photogenerated cationic initiator. In addition the initiator for the oxirane polymers can comprise or consist of an anionic initiator such as sodium methoxide, sodium ethoxide, potassium butoxide, and potassium tert-butoxide.

The surface active agent can comprise or consist of an agent selected from the group consisting of
negatively charged surface active agents such as sodium laurate, sodium laurylsulfate, sodium laurylsulfonate, sodium decylbenzenesulfonate,
neutral surface active agents such as ethoxylated aliphatic alcohols, ethoxylated alkylphenols, alkylphenols, ethoxylated fattyacid derivaties, carbohydrate derived esters, e.g., sorbitan laurate, amphiphilic polymers such as copolymers of polyethylene glycol methacrylate and lauryl acrylare or silylalkyl methacrylate or copolymers of ethylene oxide and propylene oxide, and
positively charged surface active agents such as hexadecyltrimethylammonium bromide, tetraheptylammonium chloride, or tetrabutylammonium bromid.

There is also provided a method for aminolysis of a precursor resin, said method comprising the steps of
providing a cross-linked precursor resin with aminolytically active sites,
reacting said precursor resin under aminolytical conditions, optionally in the presence of a solvent and further-optionally in the presence of a catalyst, and
obtaining a cross-linked and functionalised polymer matrix according to the invention.

In addition, the treatment of the precursor resin under aminolytical conditions may result in a reinforced cross-linked polymer network structure, possessing improved mechanical strength properties.

The precursor resin can be treated with functional amine at a molar ratio of amine:aminolytically active groups of from 1000 to 0.01, such as from 100 to 1, for example from 10 to 2.

The temperature for the reaction is typically in the range of from minus 20°C to 200°C, such as from 20°C to 150°C, for example from 40°C to 120°C.

The aminolysis can occur in the presence of a catalyst, such as a basic salt, for example sodium methoxide, potassium tert-butoxide, sodium hydroxide, potassium hydroxide, sodium carbonate, caesium hydroxide, or nuclephilic salts such as sodium cyanide, or a tertiary amine such as dimethylaminopyridin, diazobicyclononen or diazobicycloundecen.

The aminolysis can occur in a solvent, such as water; or an alcohol, such as methanol, ethanol, propanol, ethylene glycol or ethoxyethanol; or an amide, such as dimethylformamide; or a sulfoxide, such a DMSO, or an aromatic solvent such as toluene or anisole; or a nitrile, such as acetonitrile, or mixtures thereof.

There is provided the following uses of the present invention:
Use of the polymer matrix according to the invention for scavenging undesirable chemical compounds, preferably carbonyl and/or sulfonyl compounds, from a composition comprising a mixture of chemical entities. The carbonyl or sulfonyl compounds can be selected from the group of compounds consisting of organic acids, acid chlorides, sulfonyl chlorides, ketones, aldehydes, and derivatives thereof. Alternatively, the polymer matrix find use in brewing processes for improving products by preventing haze formation.

There is also provided:
Use of the polymer matrix according to the invention as support for the synthesis of an organic molecule.
Use of the polymer matrix according to the invention as support when generating a combinatorial chemistry library.
Use of the polymer matrix according to the invention as a support for the synthesis of a drug molecule, a peptide, a protein, DNA, or RNA.
Use of the polymer matrix according to the invention as support for solid phase enzyme reactions.
Use of the polymer matrix according to the invention for immobilisation of biomolecules, such as proteins, enzymes, or other biochemically active entities.
Use of the polymer matrix according to the invention for chromatographic separation or purification of desirable target compounds including affinity purification and desalting.
Use of the polymer matrix according to the invention as a pharmacologically active macromolecule.
Use of the polymer matrix according to the invention as a depot for physiologically active molecules.
Use of the polymer matrix according to the invention as an *in vivo* degradable entity.

### EXAMPLES

### Example 1. Preparation of high capacity resin

The beaded polymer resin was prepared by an inverse suspension polymerization method. To a flask containing 10 g of water, 0.81 g bisacrylolated Jeffamine ED-900 having a molecular weight of ∼1100 g/mol and 4.19 g Bisomer PEA6 (Mₙ= 336 g/mol) were added. The reaction mixture was subjected to N₂ for 15 minutes, whereafter 0.30 g ammonium persulfate was dissolved into the solution. To a three-necked baffled flask, equipped with a mechanical stirrer, 100 ml of paraffin oil and 0.050 g of a surfactant were added and heated to 70°C. The reaction mixture was then added to the oil forming a suspension of beads. After approximately 1 minute of reaction time, 0.569 ml of 1,2-Di-(dimethylamino)-ethane was injected to suspension mixture. The chemical synthesis, i.e. network formation, was performed at 70°C for 20 h. After the synthesis, the resulting beads were filtrated from the oil phase. The beads were then sequentially washed with dichloromethane, tetrahydrofurane, methanol and water to remove by-products and oil. The degree of hydroxyl functionality (hydroxyl capacity, loading) was analysed to 2.1 mol/kg. The swelling performance in water was determined to 5.7 ml/g.

### Example 2. Transfer of hydroxyl to amine functionality

To 2.5 g resin (swelled in water), produced according to example 1, 5 ml of triethyleneglycol diamine was added at room temperature, followed by the addition of 0.0046 g of potassium tert-butoxide. The reaction mixture was stirred for 20 h at a temperature of 120°C. The resin was then washed with water and ethanol to remove residuals. The degree of amine functionality (amine capacity, loading) was analyzed to 2.2 mol/kg. The swelling performance in water was determined to 10.8 ml/g.

### Example 3. Preparation of high capacity resin

The beaded polymer resin was prepared by an inverse suspension polymerization method. To a flask containing 15 g of water, 1.2 g bisacrylolated Jeffamine ED-2003 having a molecular weight of ∼2050 g/mol and 3.76 g Bisomer PEA6 (Mₙ= 336 g/mol) were added. The reaction mixture was subjected to N₂ for 15 minutes, whereafter 0.328 g ammonium persulfate was dissolved into the solution. To a three-necked baffled flask, equipped with a mechanical stirrer, 100 ml of paraffin oil and 0.050 g of a surfactant were added and heated to 70°C. The reaction mixture was then added to the oil forming a suspension of beads. After approximately 1 minute of reaction time, 0.621 ml of 1,2-Di-(dimethylamino)-ethane was injected to suspension mixture. The chemical synthesis, i.e. network formation, was performed at 70°C for 20 h. After the synthesis, the resulting beads were filtrated from the oil phase. The beads were then sequentially washed with dichloromethane, tetrahydrofurane, methanol and water to remove restproducts and oil. The degree of hydoxyl functionality (hydroxyl capacity, loading) was analyzed to 2.0 mol/kg. The swelling performance in water was determined to 7.3 ml/g.

### Example 4. Transfer of hydroxyl to amine functionality

To 22 g resin (swelled in water), produced according to example 3, 108 ml of triethyleneglycol diamine was added at room temperature, followed by the addition of 0.066 g of potassium tert-butoxide. The reaction mixture was stirred for 20 h at a temperature of 120°C. The resin was then washed with water and ethanol to remove residuals. The degree of amine functionality (amine capacity, loading) was analyzed to 1.8 mol/kg. The swelling performance in water was determined to 12.1 ml/g.

### Example 5. Preparation of high capacity resin

The beaded polymer resin was prepared by an inverse suspension polymerization method. To a flask containing 60 g of water, 21 g bisacrylolated Jeffamine ED-900 having a molecular weight of ∼1100 g/mol and 9 g Bisomer PEA6 (Mn= 336 g/mol) were added. The reaction mixture was subjected to N2 for 15 minutes, whereafter 1.67 g ammonium persulfate was dissolved into the solution. To a three-necked baffled flask, equipped with a mechanical stirrer, 600 ml of paraffin oil and 0.30 g of a surfactant were added and heated to 70°C. The reaction mixture was then added to the oil forming a suspension of beads. After approximately 1 minute of reaction time, 3.16 ml of 1,2-Di-(dimethylamino)-ethane was injected to suspension mixture, followed by the addition of 1.24 g sodium bisulfite dissolved in water. The chemical synthesis, i.e. network formation, was performed at 70°C for 24 h. After the synthesis, the resulting beads were filtrated from the oil phase. The beads were then sequentially washed with dichloromethane, tetrahydrofurane, methanol and water to remove rest products and oil. The degree of hydoxyl functionality (hydroxyl capacity, loading) was analyzed to 0.9 mol/kg. The swelling performance in water was determined to 4.9 ml/g.

### Example 6. Transfer of hydroxyl to amine functionality

To 2.5 g resin (swelled in water), produced according to example 5, 3 ml of ethylene diamine was added at room temperature, followed by the addition of 0.0042 g of potassium tert-butoxide. The reaction mixture was refluxed for 20 h. The resin was then washed with water and ethanol to remove residuals. The degree of amine functionality (amine capacity, loading) was analyzed to 1.0 mol/kg. The swelling performance in water was determined to 5.1 ml/g.

### Example 7. Ion strength dependant swelling of partially aminolyzed resin.

A hydroxyester resin prepared according to example 3 was treated with a 20-fold excess of short bis-aminopropyl-propyleneglycol, Jeffamine D-230 (Huntsmann corporation) at 120°C for 16 hours. The product was rinsed 5 times with each of the following solvents water, ethanol, dichloromethane and was subsequently dried. Judged from IR, approximately 25% of the ester groups were converted to functional amides.

The swelling of the formed resin were measured by measuring the compacted bed of 100 mg dry resin after swelling in the appropriate solution.

| **Solution** | **Swelling** **(ml/g)** |
|---|---|
| Demineralised water | 30 |
| 0.0005 M phosphate buffer pH 7.0 | 21 |
| 0.005 M phosphate buffer pH 7.0 | 13 |
| 0.05 M phosphate buffer pH 7.0 | 9 |
| 4 M Hydrochloric acid | 8 |
| 4 M Sodium Hydroxide | 9.5 |

Similar swelling behaviours were obtained when using Jeffamine EDR 148 for the aminolysis.

## Claims

1. A resin comprising a polymer matrix comprising a plurality of functional groups,
wherein the polymer matrix is obtainable by aminolysis of a precursor resin with a functional amine, and
wherein the precursor resin is obtainable by polymerisation of a well-defined mixture of
i) cross-link monomers comprising of two or more polymerizable groups, wherein the molecular weight of the cross-link monomer is in the range of 1,000 to 10,000, and
ii) an aminolytically sensitive monomer selected from the group consisting of acrylate esters, the acrylate esters comprising or consisting of an acrylate selected from the group consisting of methyl acrylate, ethyl acrylate, propyl acrylate, hydroxylethyl acrylate, hydroxypropyl acrylate, glycerol acrylate, diethylene glycol acrylate, triethyleneglycol acrylate, tetraethylenglycol acrylate, pentaethyleneglycol acrylate, hexaethyleneglycol acrylate, heptaethyleneglycol acrylate, octaethyleneglycol acrylate, nonaethylenglycol acrylate, and decaethyleneglycol acrylate, including any combination thereof

2. The resin according to claim 1, wherein the polymerization occurs in the presence of a chain extension monomer.

3. The resin according to any of claims 1 and 2, wherein the chain extension monomer comprises or consists of a reactive compound having a polymerizable group.

4. The resin according to any of claims 1 to 3, wherein the cross-link monomer comprise or consist of polyalkyleneglycols with two or more polymerizable groups.

5. The resin according to any of claims 1 to 4, wherein the functional amine used in the aminolysis process is a primary or secondary amine, or a mixture thereof.

6. The resin according to any of claims 1 to 5, wherein the cross-link monomers are selected from vinyl compounds of terminally aminated polymers of ethylene oxide.

7. The resin according to any of claims 1 to 5, wherein the cross-link monomers are selected from vinyl compounds of terminally aminated polymers of propylene oxide.

8. The resin according to any of claims 1 to 5, wherein the cross-link monomers are selected from vinyl compounds of terminally aminated polymers of ethylene oxide and propylene oxide.

9. The resin according to any of claims 1 to 8 wherein the cross-link monomer is an acrylamide of a Jeffamine.

10. A method for generating a precursor resin for a polymer matrix obtainable by aminolysis of said precursor resin, wherein said precursor resin is obtainable by polymerisation of i) cross-link monomers comprising of two or more polymerizable groups, wherein the molecular weight of the cross-link monomer is in the range of 1,000 to 10,000, and ii) an aminolytically sensitive monomer selected from the group consisting of acrylate esters, the acrylate esters comprising or consisting of an acrylate selected from the group consisting of methyl acrylate, ethyl acrylate, propyl acrylate, hydroxylethyl acrylate, hydroxypropyl acrylate, glycerol acrylate, diethylene glycol acrylate, triethyleneglycol acrylate, tetraethylenglycol acrylate, pentaethyleneglycol acrylate, hexaethyleneglycol acrylate, heptaethyleneglycol acrylate, octaethyleneglycol acrylate, nonaethylenglycol acrylate, and decaethyleneglycol acrylate, including any combination thereof, said method comprising the steps of
providing at least one cross-link monomer,
providing at least one aminolytically sensitive monomer,
optionally providing a chain extension monomer,
further optionally providing an initiator of polymerization,
polymerizing the cross-link monomers, aminolytically sensitive monomers, and optionally chain extension monomers provided under a) radical polymerisation conditions, or b) under ionic polymerization conditions,
optionally beading the polymerized cross-link monomers, aminolytically sensitive monomers, and optionally chain extension monomers in batch or continous process, said beading being catalysed by a radiation initiator or a thermally induced initiator, and
obtaining a cross-linked and optionally beaded precursor resin of the polymer matrix according to any of claims 1 to 9.

11. A method for aminolysis of a precursor resin comprising the steps of
providing a cross-linked precursor resin with aminolytically active sites according to the method defined in claim 10,
reacting said precursor resin under aminolytical conditions, optionally in the presence of a solvent and further optionally in the presence of a catalyst, and
obtaining a cross-linked and functionalised polymer matrix according to any of claims 1 to 9.

12. Use of the polymer matrix according to any of claims 1 to 9 for scavenging undesirable chemical compounds, preferably carbonyl and/or sulfonyl compounds, from a composition comprising a mixture of chemical entities.

13. Use of the polymer matrix according to any of claims 1 to 9 as support for the synthesis of an organic molecule.

## Patentansprüche

1. Harz, umfassend eine Polymermatrix, umfassend eine Mehrzahl funktioneller Gruppen,
wobei die Polymermatrix durch eine Aminolyse eines Vorläuferharzes mit einem funktionellen Amin erhältlich ist und
wobei das Vorläuferharz durch Polymerisation einer definierten Mischung erhältlich ist aus
i) vernetzten Monomeren, umfassend zwei oder mehr polymerisierbare Gruppen, wobei das Molekulargewicht der vernetzten Monomere im Bereich von 1.000 bis 10.000 liegt, und
ii) einem aminolytisch empfindlichen Monomer, ausgewählt aus der Gruppe, bestehend aus Acrylatestern, wobei die Acrylatester ein Acrylat umfassen oder daraus bestehen, ausgewählt aus der Gruppe, bestehend aus Methylacrylat, Ethylacrylat, Propylacrylat, Hydroxylethylacrylat, Hydroxypropylacrylat, Glycerolacrylat, Diethylenglycolacrylat, Triethylenglycolacrylat, Tetraethylenglycolacrylat, Pentaethylenglycolacrylat, Octaethylenglycolacrylat, Heptaethylenglycolacrylat, Octaethylenglycolacrylat, Nonaethylenglycolacrylat und Decaethylenglycolacrylat, einschließlich jeder Kombination davon.

2. Harz nach Anspruch 1, wobei die Polymerisation in Gegenwart eines Kettenverlängerungsmonomers abläuft.

3. Harz nach Anspruch 1 oder 2, wobei das Kettenverlängerungsmonomer eine reaktive Verbindung mit einer polymerisierbaren Gruppe umfasst oder daraus besteht.

4. Harz nach einem der Ansprüche 1 bis 3, wobei das vernetzte Monomer Polyalkylenglycole mit zwei oder mehr polymerisierbaren Gruppen umfasst oder daraus besteht.

5. Harz nach einem der Ansprüche 1 bis 4, wobei das im Aminolyseverfahren verwendete funktionelle Amin ein primäres oder sekundäres Amin oder eine Mischung davon ist.

6. Harz nach einem der Ansprüche 1 bis 5, wobei die vernetzten Monomere ausgewählt sind aus Vinylverbindungen mit endständig aminierten Ethylenoxidpolymeren.

7. Harz nach einem der Ansprüche 1 bis 5, wobei die vernetzten Monomere ausgewählt sind aus Vinylverbindungen mit endständig aminierten Propylenoxidpolymeren.

8. Harz nach einem der Ansprüche 1 bis 5, wobei die vernetzten Monomere ausgewählt sind aus Vinylverbindungen mit endständig aminierten Ethylenoxidpolymeren und Propylenoxidpolymeren.

9. Harz nach einem der Ansprüche 1 bis 8, wobei das vernetzte Monomer ein Acrylamin eines Jeffamins ist.

10. Verfahren zum Erzeugen eines Vorläuferharzes für eine Polymermatrix, die durch Aminolyse des Vorläuferharzes erhältlich ist, wobei das Vorläuferharz erhältlich ist durch Polymerisation von i) vernetzten Monomeren, umfassend zwei oder mehr polymerisierbare Gruppen, wobei das Molekulargewicht der vernetzten Monomere im Bereich von 1.000 bis 10.000 liegt, und ii) einem aminolytisch empfindlichen Monomer, ausgewählt aus der Gruppe, bestehend aus Acrylatestern, wobei die Acrylatester ein Acrylat umfassen oder daraus bestehen, ausgewählt aus der Gruppe, bestehend aus Methylacrylat, Ethylacrylat, Propylacrylat, Hydroxylethylacrylat, Hydroxypropylacrylat, Glycerolacrylat, Diethylenglycolacrylat, Triethylenglycolacrylat, Tetraethylenglycolacrylat, Pentaethylenglycolacrylat, Octaethylenglycolacrylat, Heptaethylenglycolacrylat, Octaethylenglycolacrylat, Nonaethylenglycolacrylat und Decaethylenglycolacrylat, einschließlich jeder Kombination davon, wobei das Verfahren folgende Schritte umfasst
Bereitstellen mindestens eines vernetzten Monomers,
Bereitstellen mindestens eines aminolytisch empfindlichen Monomers,
fakultativ Bereitstellen eines Kettenverlängerungsmonomers,
weiterhin fakultativ Bereitstellen eines Polymerisationsinitiators,
Polymerisieren der vernetzten Monomere, aminolytisch empfindlichen Monomere und fakultativ der bereitgestellten Kettenverlängerungsmonomere unter a) Bedingungen der radikalischen Polymerisation oder b) unter Bedingungen der ionischen Polymerisation,
fakultativ Perlen der polymerisierten vernetzten Monomere, aminolytisch empfindlichen Monomere und fakultativ der Kettenverlängerungsmonomere in einem diskontinuierlichen oder kontinuierlichen Verfahren, wobei das Perlen durch einen Strahlungsinitiator oder einen thermisch induzierten Initiator katalysiert wird, und
Erhalten eines vernetzten und fakultativ perlenförmigen Vorläuferharzes der Polymermatrix nach einem der Ansprüche 1 bis 9.

11. Verfahren zur Aminolyse eines Vorläuferharzes, umfassend die Schritte des Bereitstellens eines vernetzten Vorläuferharzes mit aminolytisch aktiven Zentren nach dem Verfahren nach Anspruch 10,
Reagieren des Vorläuferharzes unter aminolytischen Bedingungen, fakultativ in Gegenwart eines Lösungsmittels und weiterhin fakultativ in Gegenwart eines Katalysators und
Erhalten einer vernetzten und funktionalisierten Polymermatrix nach einem der Ansprüche 1 bis 9.

12. Verwendung der Polymermatrix nach einem der Ansprüche 1 bis 9 zum Fangen unerwünschter chemischer Verbindungen, vorzugsweise Carbonyl- und/oder Sulfonylverbindungen, in einer Zusammensetzung, umfassend eine Mischung aus chemischen Gruppierungen.

13. Verwendung der Polymermatrix nach einem der Ansprüche 1 bis 9 zur Unterstützung der Synthese eines organischen Moleküls.

## Revendications

1. Résine comprenant une matrice polymère comprenant plusieurs groupes fonctionnels,
où la matrice polymère peut être obtenue par aminolyse d'une résine précurseur avec une amine fonctionnelle, et
où la résine précurseur peut être obtenue par polymérisation d'un mélange bien défini de
i) monomères réticulables composés d'au moins deux groupes polymérisables, où la masse moléculaire du monomère réticulable est située dans la plage de 1 000 à 10 000, et
ii) un monomère sensible à l'aminolyse choisi dans le groupe constitué d'esters d'acrylate, les esters d'acrylate comprenant ou étant constitués d'un acrylate choisi dans le groupe constitué de l'acrylate de méthyle, l'acrylate d'éthyle, l'acrylate de propyle, l'acrylate d'hydroxyéthyle, l'acrylate d'hydroxypropyle, l'acrylate de glycérol, l'acrylate de diéthylèneglycol, l'acrylate de triéthylèneglycol, l'acrylate de tétraéthylèneglycol, l'acrylate de pentaéthylèneglycol, l'acrylate d'hexaéthylèneglycol, l'acrylate d'heptaéthylèneglycol, l'acrylate d'octaéthylèneglycol, l'acrylate de nonaéthylènglycol et l'acrylate de décaéthylèneglycol, y compris toute combinaison de ceux-ci.

2. La résine selon la revendication 1, où la polymérisation se produit en présence d'un monomère allongeur de chaîne.

3. La résine selon l'une quelconque des revendications 1 et 2, où le monomère allongeur de chaîne comprend ou est constitué d'un composé réactif porteur d'un groupe polymérisable.

4. La résine selon l'une quelconque des revendications 1 à 3, où le monomère réticulable comprend ou est constitué de polyalkylèneglycols porteurs d'au moins deux groupes polymérisables.

5. La résine selon l'une quelconque des revendications 1 à 4, où l'amine fonctionnelle utilisée dans le procédé d'aminolyse est une amine primaire ou secondaire, ou un mélange de celles-ci.

6. La résine selon l'une quelconque des revendications 1 à 5, où les monomères réticulables sont choisis parmi des composés vinyliques de polymères d'oxyde d'éthylène à terminaison amine.

7. La résine selon l'une quelconque des revendications 1 à 5, où les monomères réticulables sont choisis parmi des composés vinyliques de polymères d'oxyde de propylène à terminaison amine.

8. La résine selon l'une quelconque des revendications 1 à 5, où les monomères réticulables sont choisis parmi des composés vinyliques de polymères d'oxyde d'éthylène et d'oxyde de propylène à terminaison amine.

9. La résine selon l'une quelconque des revendications 1 à 8, où le monomère réticulable est un acrylamide d'une Jeffamine.

10. Méthode de production d'une résine précurseur d'une matrice polymère pouvant être obtenue par aminolyse de ladite résine précurseur, où ladite résine précurseur peut être obtenue par polymérisation de i) monomères réticulables composés d'au moins deux groupes polymérisables, où la masse moléculaire du monomère réticulable est située dans la plage de 1 000 à 10 000, et ii) un monomère sensible à l'aminolyse choisi dans le groupe constitué d'esters d'acrylate, les esters d'acrylate comprenant ou étant constitués d'un acrylate choisi dans le groupe constitué de l'acrylate de méthyle, l'acrylate d'éthyle, l'acrylate de propyle, l'acrylate d'hydroxyéthyle, l'acrylate d'hydroxypropyle, l'acrylate de glycérol, l'acrylate de diéthylèneglycol, l'acrylate de triéthylèneglycol, l'acrylate de tétraéthylèneglycol, l'acrylate de pentaéthylèneglycol, l'acrylate d'hexaéthylèneglycol, l'acrylate d'heptaéthylèneglycol, l'acrylate d'octaéthylèneglycol, l'acrylate de nonaéthylènglycol et l'acrylate de décaéthylèneglycol, y compris toute combinaison de ceux-ci, ladite méthode comprenant les étapes suivantes apport d'au moins un monomère réticulable,
apport d'au moins un monomère sensible à l'aminolyse,
éventuellement, apport d'un monomère allongeur de chaîne,
encore éventuellement, apport d'un initiateur de polymérisation,
polymérisation des monomères réticulables, des monomères sensibles à l'aminolyse, et éventuellement des monomères allongeurs de chaîne apportés a) dans des conditions de polymérisation radicalaire, ou b) dans des conditions de polymérisation ionique,
éventuellement perlage des monomères réticulables polymérisés, des monomères sensibles à l'aminolyse, et éventuellement des monomères allongeurs de chaînes dans un procédé discontinu ou continu, ledit perlage étant catalysé par un initiateur par rayonnement ou par un initiateur thermique, et obtention d'une résine précurseur réticulée et éventuellement perlée de la matrice polymère selon l'une quelconque des revendications 1 à 9.

11. Méthode d'aminolyse d'une résine précurseur comprenant les étapes suivantes
apport d'une résine précurseur réticulée porteuse de sites à activité aminolytique selon la méthode définie à la revendication 10,
réaction de ladite résine précurseur dans des conditions aminolytiques, éventuellement en présence d'un solvant et encore éventuellement en présence d'un catalyseur, et
obtention d'une matrice polymère réticulée et fonctionnalisée selon l'une quelconque des revendications 1 à 9.

12. Utilisation de la matrice polymère selon l'une quelconque des revendications 1 à 9 pour éliminer des composés chimiques indésirables, de préférence des composés carbonyle et/ou sulfonyle, d'une composition comprenant un mélange d'entités chimiques.

13. Utilisation de la matrice polymère selon l'une quelconque des revendications 1 à 9 comme support pour la synthèse d'une molécule organique.
